# EUROPEAN PATENT SPECIFICATION

(11) **EP 4 343 967 B1**
(45) Date of publication and mention of the grant of the patent: **29.10.2025**
(21) Application number: 23741963.5
(22) Date of filing: 26.05.2023
(51) Int. Cl.: H01Q 21/06, H01Q 1/48, H01Q 1/24, H01Q 9/04

(54) **ELECTRONIC DEVICE COMPRISING ANTENNA**
ELEKTRONISCHE VORRICHTUNG MIT ANTENNE
DISPOSITIF ÉLECTRONIQUE COMPRENANT UNE ANTENNE

(30) Priority: 02.08.2022 KR 20220095870; 18.08.2022 KR 20220103244
(43) Date of publication of application: 27.03.2024
(73) Proprietor: Samsung Electronics Co., Ltd., Suwon-si, Gyeonggi-do 16677 (KR)
(72) Inventor: KWON, Soonheung, Gyeonggi-do 16677 (KR); YUN, Sumin, Gyeonggi-do 16677 (KR); KIM, Hosaeng, Gyeonggi-do 16677 (KR); LEE, Hyungjoo, Gyeonggi-do 16677 (KR); CHO, Woosik, Gyeonggi-do 16677 (KR)
(74) Representative: Gulde & Partner
(86) International application number: PCT/KR2023/007323
(87) International publication number: WO 2024/029709

(56) References cited:
- WO-A1-2022/124775
- WO-A1-2022/154643
- KR-A- 20210 141 116
- KR-A- 20220 080 544
- KR-A- 20220 087 006
- KR-A- 20220 104 565
- US-A- 5 724 048
- US-A1- 2020 021 011
- US-A1- 2021 242 593

## Description

### BACKGROUND

### 1. Field

The disclosure relates to an electronic device including an antenna.

### 2. Description of Related Art

An antenna is an interface between radio waves that propagating through space and current. For example, the antenna may be used together with a transmitter and/or a receiver. The antenna may be configured to transmit data of a predetermined band. The above description is information the inventor(s) acquired during the course of conceiving the present disclosure, or already possessed at the time, and is not necessarily art publicly known before the present application was filed. Prior art documents US2020/021011A1, WO2022/154643A1, WO 2022/124775A1, US2021/242593A1 disclose a triangular three element microstrip antenna array without an additional ground layer between the elements.

### SUMMARY

According to an embodiment, an electronic device includes a housing, a plate disposed on the housing, and an antenna disposed on a first surface of the plate. The plate includes a plurality of first sections and a second section, and the antenna includes a plurality of layers stacked on the plate. The plurality of layers include a first layer including a plurality of radiation patches disposed in the plurality of first sections, respectively, a second layer including a dielectric disposed in the plurality of first sections and the second section, and a third layer including a ground disposed in the second section, a plurality of first bonding portions disposed in the plurality of first sections, respectively, and configured to bond the dielectric and the plate, and a second bonding portion disposed in the second section and configured to bond the ground and the plate, and wherein a thickness of each of the plurality of first bonding portions is greater than a thickness of the second bonding portion.

According to an embodiment, an antenna includes a first layer including a plurality of radiation patches disposed in a plurality of first sections, respectively, a second layer including a dielectric disposed in the plurality of first sections and a second section, and a third layer including a ground disposed in the second section, a plurality of first bonding portions disposed in the plurality of first sections, respectively, and configured to bond the dielectric and the plate, and a second bonding portion disposed in the second section and configured to bond the ground and the plate, and wherein a thickness of each of the plurality of first bonding portions is greater than a thickness of the second bonding portion.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 is a block diagram of an electronic device in a network environment according to an embodiment;
FIG. 2A is a perspective view of an electronic device viewed in one direction according to an embodiment;
FIG. 2B is a perspective view of an electronic device viewed in another direction according to an embodiment;
FIG. 2C is an exploded perspective view of an electronic device according to an embodiment;
FIG. 3 is a block diagram of a wireless communication module, a power management module, and an antenna module of an electronic device according to an embodiment;
FIG. 4 is a plan view of a plate and an antenna of an electronic device according to an embodiment;
FIG. 5 is a cross-sectional view of the electronic device of FIG. 4, taken along a line 5-5 according to an embodiment;
FIG. 6 is a cross-sectional view of the electronic device of FIG. 4, taken along a line 6-6 according to an embodiment;
FIG. 7 is a perspective view of a portion of a structure of an antenna and a plate of an electronic device according to an embodiment;
FIG. 8 is a front perspective view of a portion of a structure of a plate of an electronic device according to an embodiment;
FIG. 9 is a rear perspective view of a portion of a structure of a plate of an electronic device according to an embodiment;
FIG. 10 is a plan view of a plate of an electronic device according to an embodiment;
FIG. 11 is a plan view of a plate and an antenna of an electronic device according to an embodiment;
FIG. 12 is a cross-sectional view of the electronic device of FIG. 11, taken along a line 12-12 according to an embodiment;
FIG. 13 is a cross-sectional view of the electronic device of FIG. 11, taken along a line 13-13 according to an embodiment;
FIG. 14 is a perspective view of a plate of an electronic device according to an embodiment;
FIG. 15 is a perspective view of a plate and an antenna of an electronic device according to an embodiment;
FIG. 16 is a perspective view of a printed circuit board (PCB) and an antenna of an electronic device according to an embodiment;
FIG. 17 is a perspective view of a plate of an electronic device according to an embodiment;
FIG. 18 is a plan view of a plate and an antenna of an electronic device according to an embodiment; and
FIG. 19 illustrates a plate and an antenna of an electronic device according to an embodiment.

### DETAILED DESCRIPTION

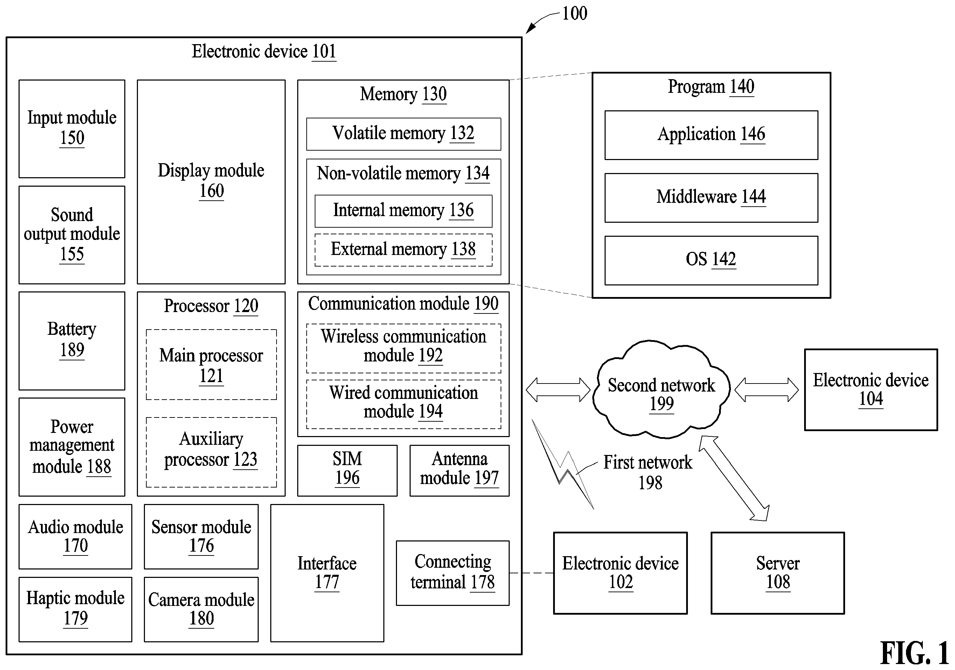

FIG. 1 is a block diagram of an electronic device in a network environment according to an embodiment.

Referring to FIG. 1, an electronic device 101 in a network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the above components may be omitted from the electronic device 101, or one or more other components may be added to the electronic device 101. In some embodiments, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to an embodiment, as at least a part of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for processing of an artificial intelligence (AI) model. The AI model may be generated by machine learning. Such learning may be performed by, for example, the electronic device 101 in which artificial intelligence is performed, or performed via a separate server (e.g., the server 108). A learning algorithm may include, but is not limited to, for example, supervised learning, unsupervised learning, semi-supervised learning, or reinforcement learning. The artificial intelligence model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more thereof, but is not limited thereto. The AI model may additionally or alternatively include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing record. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector and control circuitry to control a corresponding one of the display, the hologram device, and the projector. According to an embodiment, the display module 160 may include a touch sensor adapted to sense a touch, or a pressure sensor adapted to measure an intensity of a force incurred by the touch.

The audio module 170 may convert a sound into an electric signal and vice versa. According to an embodiment, the audio module 170 may obtain the sound via the input module 150 or output the sound via the sound output module 155 or an external electronic device (e.g., an electronic device 102 such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101, and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electric signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently of the processor 120 (e.g., an AP) and that support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local region network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide region network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and a next-generation communication technology, e.g., a new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to an embodiment, the antenna module 197 may form a mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of the same type as or a different type from the electronic device 101. According to an embodiment, all or some of operations to be executed by the electronic device 101 may be executed at one or more external electronic devices (e.g., the external devices 102 and 104, and the server 108). For example, if the electronic device 101 needs to perform a function or a service automatically, or in response to a request from a user or another device, the electronic device 101, instead of, or in addition to, executing the function or the service, may request one or more external electronic devices to perform at least part of the function or the service. The one or more external electronic devices receiving the request may perform the at least part of the function or the service requested, or an additional function or an additional service related to the request, and may transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low-latency services using, e.g., distributed computing or MEC. In an embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., a smart home, a smart city, a smart car, or healthcare) based on 5G communication technology or IoT-related technology.

The electronic device according to embodiments may be one of various types of electronic devices. The electronic device may include, for example, a portable communication device (e.g., a smartphone), a computer device, a portable multimedia device, a portable medical device, a camera, a wearable device, or a home appliance device. According to an embodiment of the present disclosure, the electronic device is not limited to those described above.

It should be appreciated that embodiments of the disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "at least one of A, B, or C", each of which may include any one of the items listed together in the corresponding one of the phrases, or all possible combinations thereof. Terms such as "1^{st}", "2^{nd}", or "first" or "second" may simply be used to distinguish the component from other components in question, and do not limit the components in other aspects (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., by wire), wirelessly, or via a third element.

As used in connection with embodiments of the disclosure, the term "module" may include a unit implemented in hardware, software, or firmware, and may interchangeably be used with other terms, for example, "logic", "logic block", "part". or "circuitry". A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method disclosed herein may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components or operations may be omitted, or one or more other components or operations may be added. Alternatively or additionally, a plurality of components (e.g., modules or programs) may be integrated into a single component. In such a case, according to embodiments, the integrated component may still perform one or more functions of each of the plurality of components in the same manner or in a similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

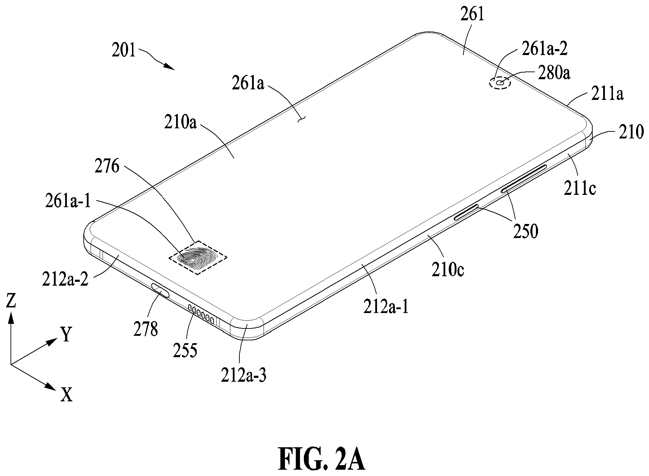

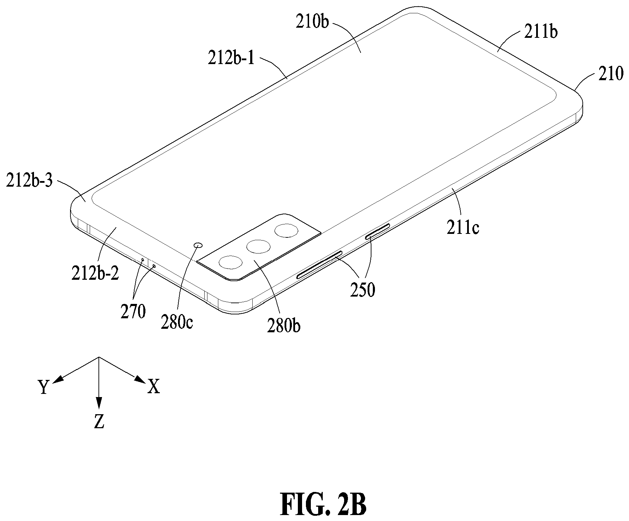

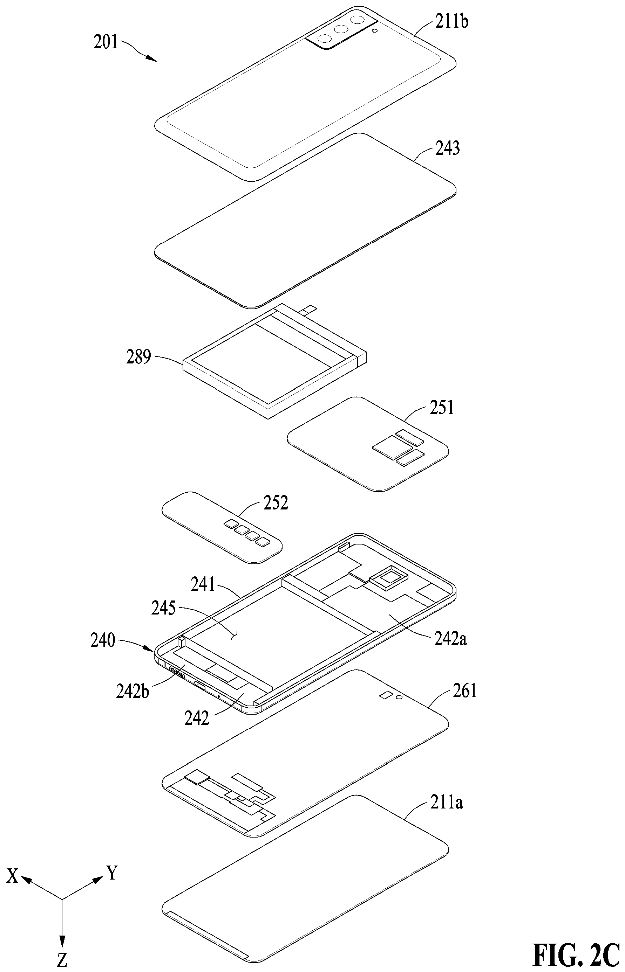

FIG. 2A is a perspective view of an electronic device viewed in one direction according to an embodiment. FIG. 2B is a perspective view of an electronic device viewed in another direction according to an embodiment. FIG. 2C is an exploded perspective view of an electronic device according to an embodiment.

Referring to FIGS. 2A through 2C, an electronic device 201 (e.g., the electronic device 101 of FIG. 1) may include a housing 210 including a first surface 210a (e.g., a front surface), a second surface 210b (e.g., a rear surface), and a third surface 210c (e.g., a side surface) enclosing a space between the first surface 210a and the second surface 210b.

In an embodiment, the first surface 210a may be formed by a first plate 211a of which at least a portion is substantially transparent. For example, the first plate 211a may include a polymer plate or a glass plate including at least one coating layer.

In an embodiment, the second surface 210b may be formed by a second plate 211b that is substantially opaque. For example, the second plate 211b may be formed of coated or tinted glass, ceramic, polymer, metal (e.g., aluminum, stainless steel (STS), or magnesium), or a combination thereof.

In an embodiment, the third surface 210c may be formed by a frame 211c that is coupled to the first plate 211a and the second plate 211b and that includes a metal and/or a polymer.

In an embodiment, the second plate 211b and the frame 211c may be integrated and seamlessly formed. In an embodiment, the second plate 211b and the frame 211c may be formed of substantially the same material (e.g., aluminum).

In an embodiment, the first plate 211a may include a plurality of first periphery areas 212a-1. The plurality of first periphery areas 212a-1 may face the second plate 211b from at least a partial area of the first surface 210a. The plurality of first periphery areas 212a-1 may be in contact with the second plate 211b. The plurality of first periphery areas 212a-1 may extend in one direction (e.g., a +/-Y direction). The first plate 211a may include a plurality of second periphery areas 212a-2. The plurality of second periphery areas 212a-2 may face the second plate 211b from at least a partial area of the first surface 210a. The plurality of second periphery areas 212a-2 may be in contact with the second plate 211b. The plurality of second periphery areas 212a-2 may extend in a direction (e.g., a +/-X direction) different from the direction (e.g., the +/-Y direction) in which the plurality of first periphery areas 212a-1 extends. The first plate 211a may include a plurality of third periphery areas 212a-3. The plurality of third periphery areas 212a-3 may face the second plate 211b from at least a partial area of the first surface 210a. The plurality of third periphery areas 212a-3 may be in contact with the second plate 211b. The plurality of third periphery areas 212a-3 may be disposed between the plurality of first periphery areas 212a-1 and the plurality of second periphery areas 212a-2.

In an embodiment, the second plate 211b may include a plurality of fourth periphery areas 212b-1. The plurality of fourth periphery areas 212b-1 may face the first plate 211a from at least a partial area of the second surface 210b. The plurality of fourth periphery areas 212b-1 may be in contact with the first plate 211a. The plurality of fourth periphery areas 212b-1 may extend in one direction (e.g., the +/-Y direction). The second plate 211b may include a plurality of fifth periphery areas 212b-2. The plurality of fifth periphery areas 212b-2 may face the first plate 211a from at least a partial area of the second surface 210b. The plurality of fifth periphery areas 212b-2 may be in contact with the first plate 211a. The plurality of fifth periphery areas 212b-2 may extend in a direction (e.g., a +/-X direction) different from the direction (e.g., the +/-Y direction) in which the plurality of fourth periphery areas 212b-1 extends. The second plate 211b may include a plurality of sixth periphery areas 212b-3. The plurality of sixth periphery areas 212b-3 may face the first plate 211a from at least a partial area of the second surface 210b. The plurality of sixth periphery areas 212b-3 may be in contact with the first plate 211a. The plurality of sixth periphery areas 212b-3 may be disposed between the plurality of fourth periphery areas 212b-1 and the plurality of fifth periphery areas 212b-2.

In an embodiment, the electronic device 201 may include a display 261 (e.g., the display module 160 of FIG. 1). In an embodiment, the display 261 may be positioned on the first surface 210a. In an embodiment, the display 261 may be visible through at least a portion (e.g., the plurality of first periphery areas 212a-1, the plurality of second periphery areas 212a-2, and/or the plurality of third periphery areas 212a-3) of the first plate 211a. In an embodiment, the display 261 may have a shape that is substantially the same as the shape of an outer edge of the first plate 211a. In some embodiments, the periphery of the display 261 may substantially coincide with the outer edge of the first plate 211a.

In an embodiment, the display 261 may include a touch sensing circuit, a pressure sensor for measuring an intensity (pressure) of a touch, and/or a digitizer for detecting a magnetic-type stylus pen.

In an embodiment, the display 261 may include a screen display area 261a that is visually exposed to display content using pixels. In an embodiment, the screen display area 261a may include a sensing area 261a-1. The sensing area 261a-1 may overlap at least a partial area of the screen display area 261a. The sensing area 261a-1 may allow transmission of an input signal related to a sensor module 276 (e.g., the sensor module 176 of FIG. 1). The sensing area 261a-1 may display content, similarly to the screen display area 261a that does not overlap the sensing area 261a-1. For example, the sensing area 261a-1 may display the content while the sensor module 276 is not operating. At least a portion of a camera area 261a-2 may overlap the screen display area 261a. In an embodiment, the screen display area 261a may include the camera area 261a-2. The camera area 261a-2 may allow transmission of an optical signal related to a first camera module 280a (e.g., the camera module 180 of FIG. 1). At least a portion of the camera area 261a-2 that overlaps the screen display area 261a may display content, similarly to the screen display area 261a that does not overlap the camera area 261a-2. For example, the camera area 261a-2 may display the content while the first camera module 280a is not operating.

In an embodiment, the electronic device 201 may include an audio module 270 (e.g., the audio module 170 of FIG. 1). In an embodiment, the audio module 270 may be positioned on the third surface 210c. In an embodiment, the audio module 270 may obtain sound through at least one hole.

In an embodiment, the electronic device 201 may include the sensor module 276. In an embodiment, the sensor module 276 may be positioned on the first surface 210a. The sensor module 276 may form the sensing area 261a-1 in at least a portion of the screen display area 261a. The sensor module 276 may receive an input signal transmitted through the sensing area 261a-1 and generate an electrical signal based on the received input signal. In an example, the input signal may have a designated physical quantity (e.g., heat, light, temperature, sound, pressure, or ultrasound). In another example, the input signal may include a signal related to biometric information (e.g., a fingerprint) of a user.

In an embodiment, the electronic device 201 may include the first camera module 280a (e.g., the camera module 180 of FIG. 1). In an embodiment, the first camera module 380a may be positioned on the first surface 210a. In an embodiment, at least a portion of the first camera module 280a may be positioned under the display 261. In an embodiment, the first camera module 280a may receive an optical signal transmitted through the camera area 261a-2.

In an embodiment, the electronic device 201 may include a second camera module 280b (e.g., the camera module 180 of FIG. 1). The second camera module 280b may be positioned on the second surface 210b. In an embodiment, the second camera module 280b may include a plurality of camera modules (e.g., a dual camera, a triple camera, or a quad camera).

In an embodiment, the electronic device 201 may include a flash 280c. The flash 280c may be positioned on the second surface 210b. In an embodiment, the flash 280c may include a light-emitting diode or a xenon lamp.

In an embodiment, the electronic device 201 may include a sound output module 255 (e.g., the sound output module 155 of FIG. 1). In an embodiment, the sound output module 255 may be positioned on the third surface 210c. In an embodiment, the sound output module 255 may include one or more holes.

In an embodiment, the electronic device 201 may include an input module 250 (e.g., the input module 150 of FIG. 1). In an embodiment, the input module 250 may be positioned on the third surface 210c. In an embodiment, the input module 250 may include at least one key input device.

In an embodiment, the electronic device 201 may include a connecting terminal 278 (e.g., the connecting terminal 178 of FIG. 1). In an embodiment, the connecting terminal 278 may be positioned on the third surface 210c. For example, when the electronic device 201 is viewed in one direction (e.g., the +Y direction), the connecting terminal 278 may be positioned substantially in a central portion of the third surface 210c, and the sound output module 255 may be positioned on one side (e.g., a right side) with respect to the connecting terminal 278.

In an embodiment, the electronic device 201 may include a support body 240, a first circuit board 251, a second circuit board 252, and a battery 289 (e.g., the battery 189 of FIG. 1). At least a portion of the support body 240 may form the housing 210 together with the first plate 211a and the second plate 211b.

In an embodiment, the support body 240 may include a first frame structure 241, a second frame structure 243, and a plate structure 242. The first frame structure 241 may surround the periphery of the plate structure 242. The first frame structure 241 may connect the periphery of the first plate 211a and the periphery of the second plate 211b. The first frame structure 241 may surround a space between the first plate 211a and the second plate 211b. At least a portion of the first frame structure 241 may form the third surface 210c of the electronic device 201. The second frame structure 243 may be positioned between the first frame structure 241 and the second plate 211b. The first frame structure 241 and the second frame structure 243 may at least partially form the frame 211c. The plate structure 242 may include a first portion 242a for accommodating the first circuit board 251, and a second portion 242b for accommodating the second circuit board 252. The display 261 may be positioned on one surface (e.g., a bottom surface or +Z-axis direction) of the plate structure 242. The first circuit board 251 and the second circuit board 252 may be positioned on the other surface (e.g., a top surface or -Z-axis direction) of the plate structure 242. In an embodiment, the plate structure 242 may further include an opening 245. The opening 245 may be positioned between the first portion 242a and the second portion 242b. The opening 245 may pass through both surfaces of the plate structure 242. The opening 245 may accommodate the battery 289.

Meanwhile, one or more embodiments described herein may also apply to electronic devices of various shapes/forms (e.g., a foldable electronic device, a slidable electronic device, a digital camera, a digital video camera, a tablet PC, a laptop computer, and other electronic devices), in addition to the electronic device shown in FIGS. 2A through 2C.

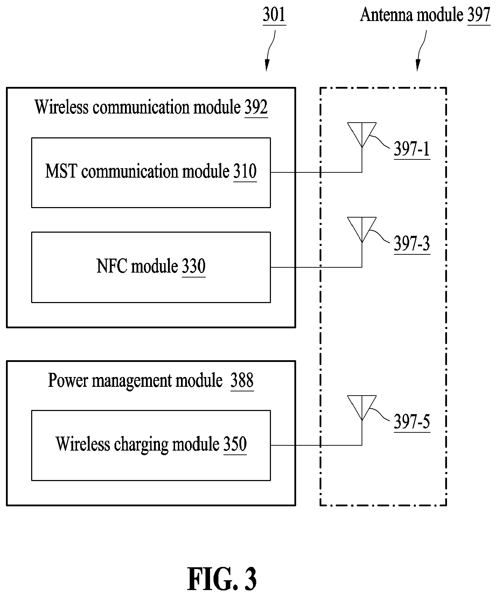

FIG. 3 is a block diagram illustrating a wireless communication module, a power management module, and an antenna module of an electronic device according to an embodiment.

Referring to FIG. 3, a wireless communication module 392 may include a magnetic secure transmission (MST) communication module 310 or a near-field communication (NFC) module 330, and a power management module 388 may include a wireless charging module 350. In such a case, the antenna module 397 may include a plurality of antennas that include an MST antenna 397-1 connected with the MST communication module 310, an NFC antenna 397-3 connected with the NFC communication module 330, and a wireless charging antenna 397-5 connected to the wireless charging module 350. For ease of description, additional description associated with components which are the same as the components of FIG. 1 will be omitted or will be briefly described.

The MST communication module 310 may receive a signal containing control information or payment information such as card information from a processor 320, generate a magnetic signal corresponding to the received signal, and then transfer the generated magnetic signal to an external electronic device 302 (e.g., a point-of-sale (POS) device) via the MST antenna 397-1. To generate the magnetic signal, according to an embodiment, the MST communication module 310 may include a switching module (not shown) that includes one or more switches connected with the MST antenna 397-1, and control the switching module to change the direction of voltage or current supplied to the MST antenna 397-1 according to the received signal. The change of the direction of the voltage or current allows the direction of the magnetic signal (e.g., a magnetic field) emitted from the MST antenna 397-1 to change accordingly. If detected at the external electronic device 302, the magnetic signal with its direction changing may cause an effect (e.g., a waveform) similar to that of a magnetic field that is generated when a magnetic card corresponding to the received signal (e.g., card information) is swiped through a card reader of the electronic device 302. According to an embodiment, for example, payment-related information and a control signal that are received by the electronic device 302 in the form of the magnetic signal may be transmitted to an external server 308 (e.g., a payment server) via a network 399.

The NFC communication module 330 may obtain a signal containing control information or payment information such as card information from the processor 320 and transmit the obtained signal to the external electronic device 302 via the NFC antenna 397-3. According to an embodiment, the NFC communication module 330 may receive such a signal transmitted from the external electronic device 302 via the NFC antenna 397-3.

The wireless charging module 350 may wirelessly transmit power to the external electronic device 302 (e.g., a cellular phone or wearable device) via the wireless charging antenna 397-5, or wirelessly receive power from the external electronic device 302 (e.g., a wireless charging device). The wireless charging module 350 may support one or more of various wireless charging schemes including, for example, a magnetic resonance scheme or a magnetic induction scheme.

According to an embodiment, some of the MST antenna 397-1, the NFC antenna 397-3, or the wireless charging antenna 397-5 may share at least part of their radiators. For example, the radiator of the MST antenna 397-1 may be used as the radiator of the NFC antenna 397-3 or the wireless charging antenna 397-5, or vice versa. In such a case, the antenna module 397 may include a switching circuit (not shown) adapted to selectively connect (e.g., close) or disconnect (e.g. open) at least part of the antennas 397-1, 397-3, or 397-5, for example, under the control of the wireless communication module 392 (e.g., the MST communication module 310 or the NFC communication module 330) or the power management module 388 (e.g., the wireless charging module 350). For example, when an electronic device 301 uses a wireless charging function, the NFC communication module 330 or the wireless charging module 350 may control the switching circuit to temporarily disconnect at least one portion of the radiators shared by the NFC antenna 397-3 and the wireless charging antenna 397-5 from the NFC antenna 397-3 and to connect the at least one portion of the radiators with the wireless charging antenna 397-5.

According to an embodiment, at least one function of the MST communication module 310, the NFC communication module 330, or the wireless charging module 350 may be controlled by an external processor (e.g., the processor 320). According to an embodiment, a specified function (e.g., a payment function) of the MST communication module 310 or the NFC communication module 330 may be performed in a trusted execution environment (TEE). According to an embodiment, the TEE may form an execution environment in which, for example, at least some designated area of the memory is allocated to be used for performing a function (e.g., a financial transaction or personal information-related function) that requires a relatively high level of security. In such a case, access to the at least some designated area of the memory may be restrictively permitted, for example, according to an entity accessing thereto or an application being executed in the TEE.

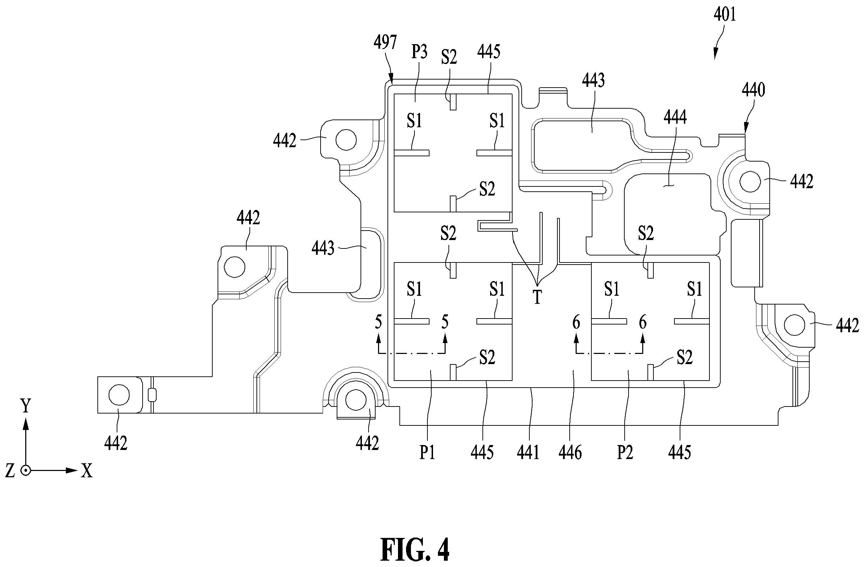

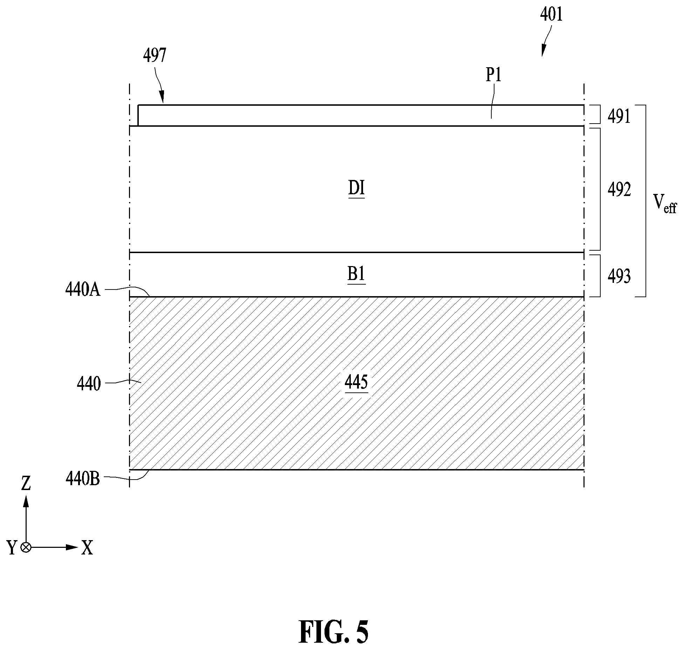

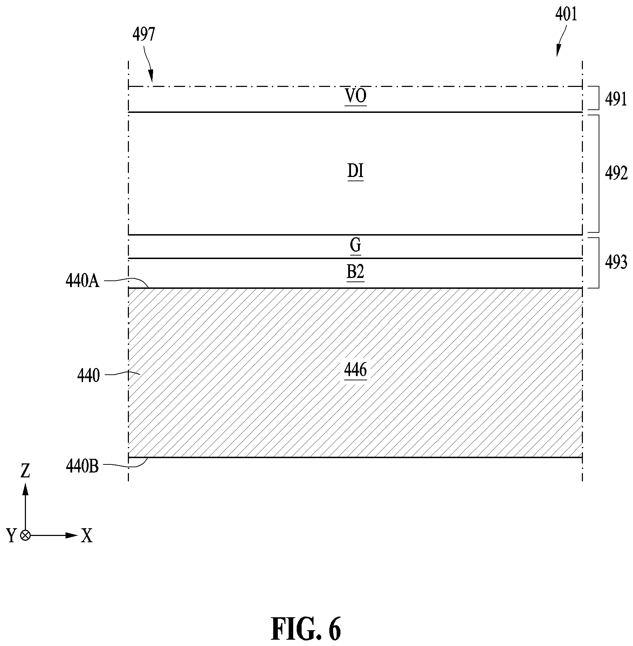

FIG. 4 is a plan view of a plate and an antenna of an electronic device according to an embodiment. FIG. 5 is a cross-sectional view of the electronic device of FIG. 4, taken along a line 5-5 according to an embodiment. FIG. 6 is a cross-sectional view of the electronic device of FIG. 4, taken along a line 6-6 according to an embodiment.

Referring to FIGS. 4 through 6, an electronic device 401 (e.g., the electronic device 101 of FIG. 1, the electronic device 201 of FIGS. 2A through 2C, and/or the electronic device 301 of FIG. 3) may include a plate 440 (e.g., the second frame structure 243 of FIGS. 2A through 2C). The plate 440 may be configured to support at least one mechanical component and/or at least one electronic component (e.g., an antenna 497).

In an embodiment, the plate 440 may include a first surface 440A (e.g., a front surface or a surface having a +Z normal direction), and a second surface 440B (e.g., a rear surface or a surface having a -Z normal direction) opposite to the first surface 440A.

In an embodiment, the plate 440 may include an arrangement area 441. At least one mechanical component and/or at least one electronic component (e.g., the antenna 497) may be disposed in the arrangement area 441. In an embodiment, the arrangement area 441 may include a substantially flat surface and/or a curved surface.

In an embodiment, the plate 440 may include at least one fastening area 442. The fastening area 442 may be configured to be fastened to another component (e.g., the first frame structure 241, the second frame structure 243, and/or the first circuit board 251 of FIGS. 2A through 2C) of the electronic device 401. For example, the fastening area 442 may include at least one of a screw, a bolt, a nut, or any suitable fastening element, or include a combination thereof. The fastening area 442 may be positioned in an edge of the arrangement area 441. The fastening area 442 may include a recessed area on the first surface 440A of the plate 440.

In an embodiment, the plate 440 may include at least one protruding area 443. The protruding area 443 may protrude from at least a portion of the arrangement area 441 in one direction (e.g., a normal direction of the arrangement area 441 or a +/-Z direction). For example, the protruding area 443 may include a curve. The protruding area 443 may protrude from the first surface 440A of the plate 440.

In an embodiment, the plate 440 may include at least one hole 444. The hole 444 may include a substantially rectangular, circular, or elliptical shape, and/or other various shapes. The hole 444 may be disposed in the arrangement area 441. For example, the hole 444 may be configured to expose at least some components (e.g., a connector) of a PCB (e.g., the first circuit board 251 of FIG. 2C). The hole 444 may include a hole through the plate 440. The hole 444 may include a hole recessed from the first surface 440A and/or the second surface 440B of the plate 440.

In an embodiment, the plate 440 may include a metallic material (e.g., stainless steel). In an embodiment, the plate 440 may include an area including a metallic material and an area including a nonmetallic material.

In an embodiment, different sections may be defined in the plate 440. For example, the plate 440 may include a plurality (e.g., three) of first sections 445, and a second section 446. The plurality of first sections 445 may not overlap the second section 446. Some (e.g., two) first sections 445 among the plurality of first sections 445 may be separated from one first section 445. For example, one first section 445 may be separated from another first section 445 in a first direction (e.g., the +/-X direction) of the plate 440. One first section 445 may be separated from another first section 445 in a second direction (e.g., the +/-Y direction) crossing (e.g., perpendicular to) the first direction of the plate 440. The second section 446 may at least partially surround the plurality of first sections 445.

In an embodiment, the electronic device 401 may include the antenna 497 (e.g., the antenna module 197 of FIG. 1 and/or the antenna module 397 of FIG. 3). The antenna 497 may be configured to transmit and/or receive a signal of a predetermined band (e.g., an ultra-wide band (UWB)).

In an embodiment, the antenna 497 may be configured to track the direction of the electronic device using a signal received from an antenna included in another electronic device (e.g., the electronic device 102 of FIG. 1). For example, the antenna 497 may measure an angle of arrival (AoA) using a phase difference between signals received by at least two radiation patches P1 and P2 among a plurality of radiation patches P1, P2, and P3.

In an embodiment, the antenna 497 may be configured to measure a distance between the electronic device 401 and another electronic device (e.g., the electronic device 102 of FIG. 1). For example, the antenna 497 may be configured to measure a time of arrival (ToF) of a signal received from an antenna included in the other electronic device.

In an embodiment, the antenna 497 may be or may include a PCB including a plurality of layers (e.g., a first layer 491, a second layer 492, and a third layer 493). For example, the antenna 497 may be a flexible PCB or may include a flexible PCB. The plurality of layers may be disposed on or over the first surface 440A of the plate 440. The plurality of layers may be stacked.

In an embodiment, the first layer 491 may include the plurality of radiation patches P1, P2, and P3. The plurality of radiation patches P1, P2 and P3 may be configured to transmit and/or receive signals.

In an embodiment, the plurality of radiation patches P1, P2, and P3 may each have a substantially rectangular shape.

In an embodiment, each of the plurality of radiation patches P1, P2, and P3 may include a plurality of (e.g., two) first slots S1 extending in the first direction (e.g., the +/-X direction). The plurality of first slots S1 may extend from an edge of each of the plurality of radiation patches P1, P2, and P3 toward the center of each of the plurality of radiation patches P1, P2, and P3.

In an embodiment, each of the plurality of radiation patches P1, P2, and P3 may include a plurality of (e.g., two) second slots S2 extending in the second direction (e.g., the +/-Y direction). The plurality of second slots S2 may extend from the edge of each of the plurality of radiation patches P1, P2, and P3 toward the center of each of the plurality of radiation patches P1, P2, and P3.

In an embodiment, a length of each of the plurality of first slots S1 and a length of each of the plurality of second slots S2 may be determined based on a desired resonant frequency of the plurality of radiation patches P1, P2, and P3. For example, the length of each of the plurality of first slots S1 may be greater than that of each of the plurality of second slots S2.

In an embodiment, the second radiation patch P2 among the plurality of radiation patches P1, P2, and P3 may be spaced apart from the first radiation patch P1 in the first direction (e.g., the +X direction). The third radiation patch P3 among the plurality of radiation patches P1, P2, and P3 may be spaced apart from the first radiation patch P1 in the second direction (e.g., the +Y direction) crossing (e.g., perpendicular to) the first direction.

In an embodiment, the plurality of radiation patches P1, P2, and P3 may include metallic materials. For example, the plurality of radiation patches P1, P2, and P3 may include copper.

In an embodiment, the plurality of radiation patches P1, P2, and P3 may be disposed in respectively corresponding first sections 445.

In an embodiment, areas of the plurality of radiation patches P1, P2, and P3 may at least partially overlap areas of the plurality of first sections 445. In an embodiment, the areas of the plurality of radiation patches P1, P2, and P3 may be included in the areas of the plurality of first sections 445.

In an embodiment, a size (e.g., a width) of each of the plurality of radiation patches P1, P2, and P3 may be substantially the same as a size (e.g., a width) of each of the areas of the plurality of first sections 445. In an embodiment, the size (e.g., the width) of each of the plurality of radiation patches P1, P2, and P3 may be less than the size (e.g., the width) of each of the areas of the plurality of first sections 445.

In an embodiment, the first layer 491 may include a non-radiative area VO. The non-radiative area VO may be disposed in the second section 446. The plurality of radiation patches P1, P2, and P3 may not be disposed in the non-radiative area VO. In an embodiment, the non-radiative area VO may include a void area. In an embodiment, the non-radiative area VO may include a dielectric.

In an embodiment, the second layer 492 may include a dielectric DI. The dielectric DI may be disposed in the plurality of first sections 445 and the second section 446.

In an embodiment, the second layer 492 may be disposed closer to the first surface 440A of the plate 440 than to the first layer 491 disposed on the first surface 440A of the plate 440.

In an embodiment, the third layer 493 may include a plurality of first bonding portions B1. The plurality of first bonding portions B1 may be configured to bond the dielectric DI of the second layer 492 and the first surface 440A of the plate 440.

In an embodiment, each of the plurality of first bonding portions B1 may include a tape.

In an embodiment, the plurality of first bonding portions B1 may be disposed in respectively corresponding first sections 445. In an embodiment, the plurality of first bonding portions B1 may not be disposed in the second section 446. In an embodiment, the plurality of first bonding portions B1 may be disposed between the dielectric DI of the second layer 492 and the first surface 440A of the plate 440. The plurality of first bonding portions B1 may contact the dielectric DI of the second layer 492. The plurality of first bonding portions B1 may contact the first surface 440A of the plate 440.

In an embodiment, the plurality of first bonding portions B1 may include non-conductive materials. For example, the non-conductive materials may include at least one of paper, glass, rubber, ceramic, plastic, or any suitable nonmetallic material, or include a combination thereof.

In an embodiment, the third layer 493 may not include a ground. Based on a structure of the antenna 497 in which the ground is not included in the plurality of first sections 445, the plurality of radiation patches P1, P2, and P3 of the first layer 491, the dielectric DI of the second layer 492, and the first bonding portions B1 of the third layer 493 may increase an effective volume V_{eff} of the antenna 497.

In an embodiment, the third layer 493 may include a ground G. The ground G may be electrically connected to the plate 440 directly or indirectly through another component (e.g., a second bonding portion B2). Since the ground G and the plate 440 are electrically connected, a ground area of the antenna 497 may be increased to be greater than the area of the ground G of the third layer 493. The antenna 497 may have a gain increased in a predetermined band (e.g., about 6.5 GHz and/or about 8 GHz). The antenna 497 may have an increased bandwidth.

In an embodiment, the ground G may include a shape of a plate.

In an embodiment, the ground G may be disposed in the second section 446. In an embodiment, the ground G may not be disposed in the plurality of first sections 445.

In an embodiment, the ground G may be disposed closer to the first surface 440A of the plate 440 than to the dielectric DI of the second layer 492 disposed on the first surface 440A of the plate 440.

In an embodiment, the ground G may include a conductive material. For example, the ground G may include a metallic material (e.g., copper).

In an embodiment, the third layer 493 may include the second bonding portion B2. The second bonding portion B2 may be configured to bond the ground G and the first surface 440A of the plate 440.

In an embodiment, the second bonding portion B2 may include a tape.

In an embodiment, the second bonding portion B2 may be disposed in the second section 446. In an embodiment, the second bonding portion B2 may not be disposed in the plurality of first sections 445. In an embodiment, the second bonding portion B2 may be physically separated from the plurality of first bonding portions B1. In an embodiment, the second bonding portion B2 may be disposed between the ground G and the first surface 440A of the plate 440. The second bonding portion B2 may contact the ground G. The second bonding portion B2 may contact the first surface 440A of the plate 440.

In an embodiment, the second bonding portion B2 may include a conductive material. For example, the conductive material may include at least one of gold, silver, copper, or any suitable metallic material, or include a combination thereof.

In an embodiment, a thickness of each of the plurality of first bonding portions B1 may be greater than that of the second bonding portion B2.

In an embodiment, the third layer 493 may be disposed closer to the first surface 440A of the plate 440 than to the second layer 492 disposed to the first surface 440A of the plate 440.

In an embodiment, the antenna 497 may include a plurality of transmission lines T. The plurality of transmission lines T may be configured to electrically connect the plurality of radiation patches P1, P2, and P3 and a connector (not shown) of another electronic component (e.g., the first circuit board 251 of FIG. 2C). The plurality of transmission lines T may be disposed in the second section 446.

In an embodiment, the plurality of radiation patches P1, P2, and P3, the dielectric DI, and the ground G may be formed from the flexible PCB of the antenna 497 in any suitable manner. For example, at least a portion of the metallic material (e.g., a copper foil) may be removed from the second section 446 of the first layer 491 by etching. At least a portion of the metallic material (e.g., a copper foil) may be removed from the first section 445 of the third layer 493 by etching.

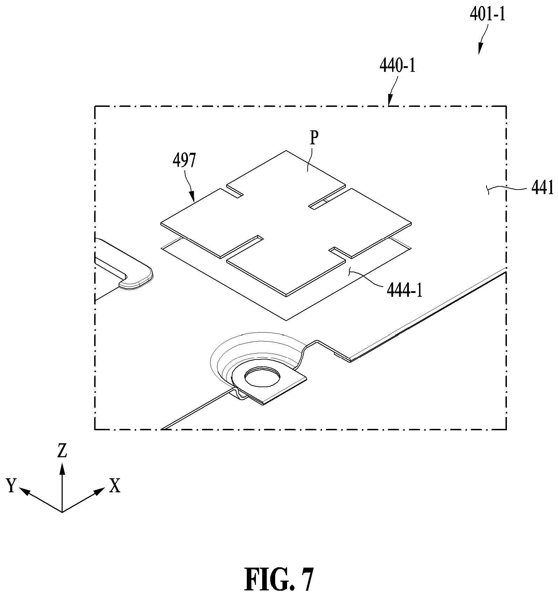

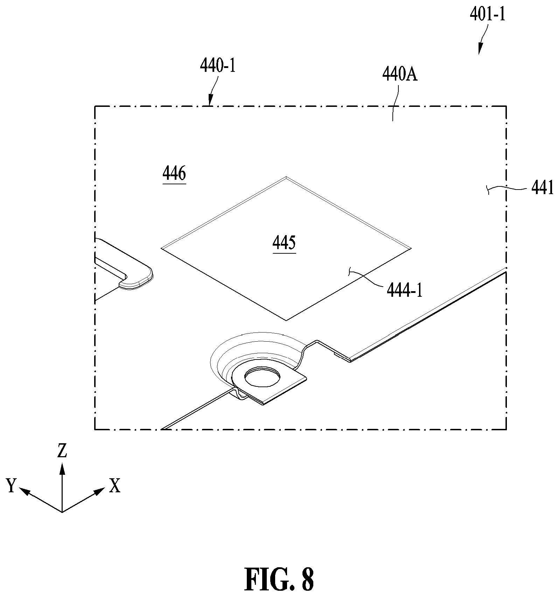

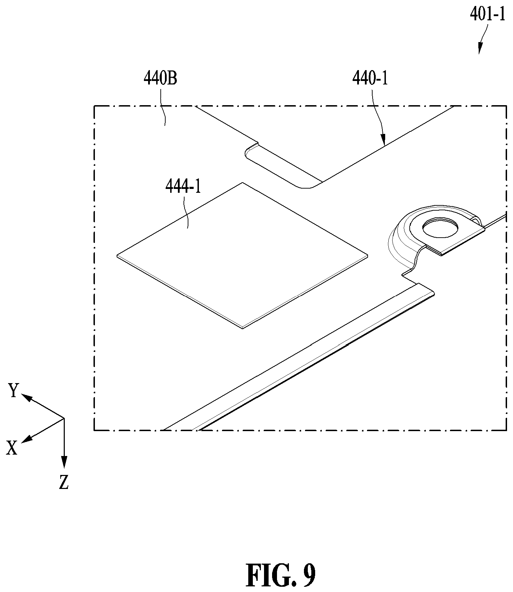

FIG. 7 is a perspective view of a portion of a structure of an antenna module and a plate of an electronic device according to an embodiment. FIG. 8 is a front perspective view of a portion of a structure of a plate of an electronic device according to an embodiment. FIG. 9 is a rear perspective view of a portion of a structure of a plate of an electronic device according to an embodiment.

Referring to FIGS. 7 through 9, an electronic device 401-1 (e.g., the electronic device 401 of FIGS. 4 through 6) may include a plate 440-1 (e.g., the plate 440 of FIGS. 4 through 6). The plate 440-1 may include a first surface 440A and a second surface 440B. The plate 440-1 may include an arrangement area 441. The antenna 497 may include a radiation patch P (e.g., the first radiation patch P1, the second radiation patch P2, and/or the third radiation patch P3).

In an embodiment, the plate 440-1 may include a recess 444-1 (e.g., the hole 444 of FIG. 4). The recess 444-1 may be configured to accommodate at least a portion (e.g., at least a portion of the second layer 492 and/or at least a portion of the third layer 493 in FIGS. 4 through 6) of the antenna 497. In an embodiment, the recess 444-1 may be disposed in the arrangement area 441.

In an embodiment, the recess 444-1 may include a substantially polygonal cross section. For example, the recess 444-1 may include a rectangular cross section.

In an embodiment, the recess 444-1 may be formed on the first surface 440A of the plate 440-1. A thickness of at least a portion of layers (e.g., the second layer 492 and/or the third layer 493) of the antenna 497 may be increased. A distance between the radiation patch P and a rear surface (e.g., a rear surface of the third layer 493 of FIGS. 4 through 6) of the antenna 497 may be increased. The effective volume (e.g., the effective volume V_{eff} of FIGS. 4 through 6) of the antenna 497 may be increased. The antenna 497 may have a gain increased in a predetermined band (e.g., about 6.5 GHz and/or about 8 GHz).

In an embodiment, the recess 444-1 may at least partially protrude from the second surface 440B of the plate 440. The thickness of at least a portion of the layers (e.g., the second layer 492 and/or the third layer 493) of the antenna 497 may be increased while the thickness of the plate 440-1 remains substantially constant. The effective volume (e.g., the effective volume V_{eff} of FIGS. 4 through 6) of the antenna 497 may be increased.

In an embodiment, the recess 444-1 may be disposed in at least one first section 445 among the plurality of first sections 445. In an embodiment, the recess 441-1 may be formed in at least a portion of the first section 445. In an embodiment, the recess 441-1 may not be disposed in the second section 446.

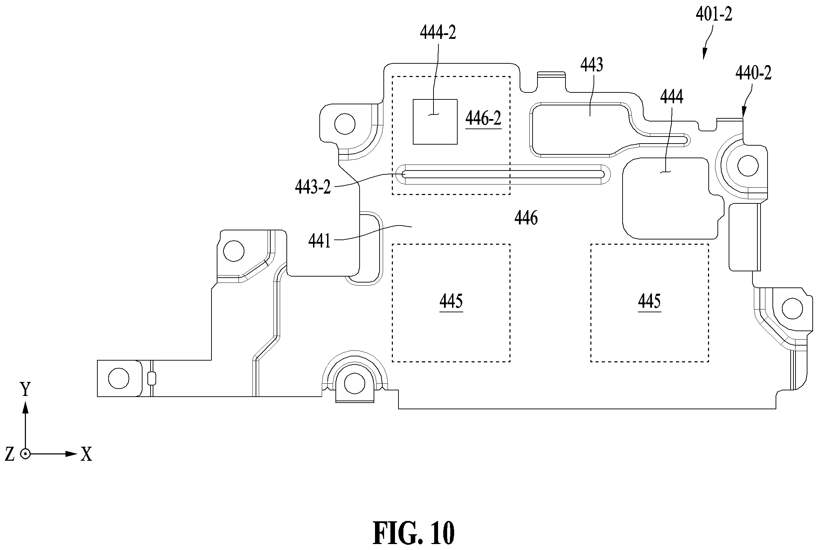

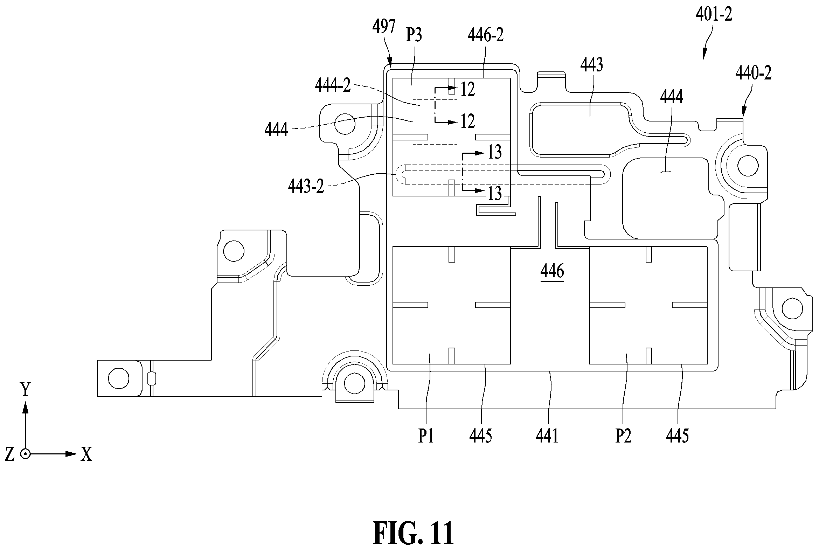

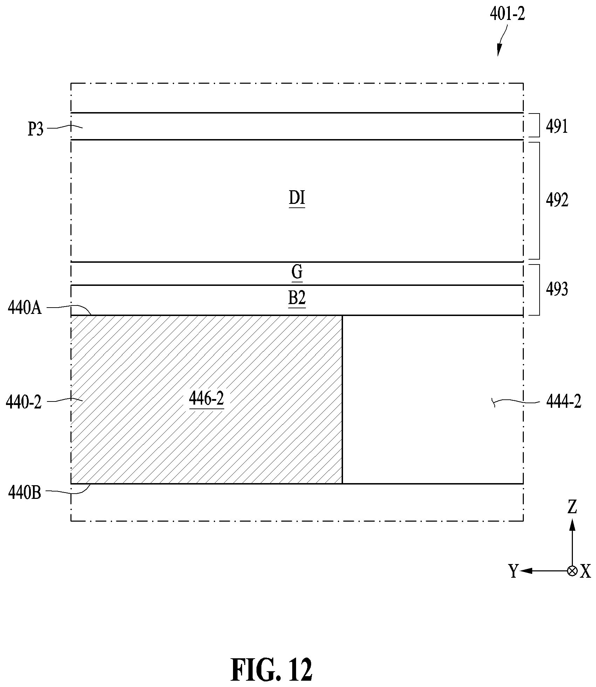

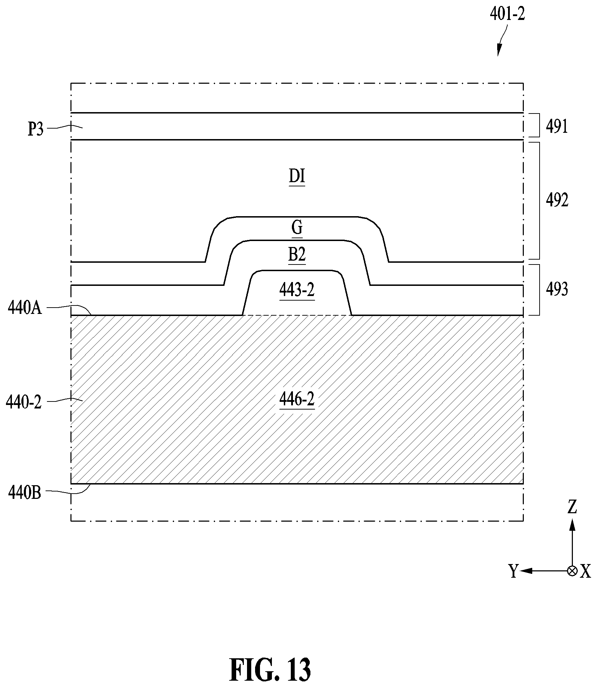

FIG. 10 is a plan view of a plate of an electronic device according to an embodiment. FIG. 11 is a plan view of a plate and an antenna module of an electronic device according to an embodiment. FIG. 12 is a cross-sectional view of the electronic device of FIG. 11, taken along a line 12-12 according to an embodiment. FIG. 13 is a cross-sectional view of the electronic device of FIG. 11, taken along a line 13-13 according to an embodiment.

Referring to FIGS. 10 through 13, an electronic device 401-2 (e.g., the electronic device 401 of FIGS. 4 through 6 and/or the electronic device 401-1 of FIGS. 7 through 9) may include a plate 440-2 (e.g., the plate 440 of FIGS. 4 through 6 and/or the plate 440-1 of FIGS. 7 through 9).

In an embodiment, the plate 440-2 may include an arrangement area 441 in which the antenna 497 is disposed.

In an embodiment, the plate 440-2 may include a plurality of protruding areas 443. The protruding area 443 may include a curve 443-2 disposed in at least a portion of the arrangement area 441. In an embodiment, the curve 443-2 may protrude from a first surface 440A of the plate 440-2.

In an embodiment, the plate 440-2 may include a plurality of holes 444. The holes 444 may include a hole 444-2 disposed in at least a portion of the arrangement area 441. In an embodiment, the hole 444-2 may extend between the first surface 440A and a second surface 440B of the plate 440-2. The hole 444-2 may pass through the plate 440-2.

In an embodiment, the plate 440-2 may include a plurality of first sections 445 and second sections 446 and 446-2. In an embodiment, the plate 440-2 may include the curve 443-2 disposed in one or more second section (e.g., the second section 446-2) among the second sections 446 and 446-2. In an embodiment, the plate 440-2 may include the hole 444-2 disposed in one or more second section (e.g., the second section 446-2) among the second sections 446 and 446-2.

In an embodiment, the electronic device 401-2 may include an antenna 497. The antenna 497 may include a plurality of layers. For example, the antenna 497 may include a first layer 491, a second layer 492, and a third layer 493.

In an embodiment, the first layer 491 may include a plurality of radiation patches (e.g., the first radiation patch P1, the second radiation patch P2, and the third radiation patch P3). The first radiation patch P1 and the second radiation patch P2 may be disposed in respectively corresponding first sections 445. The third radiation patch P3 may be disposed in the second section 446-2 in which the curve 443-2 and/or the hole 444-2 are disposed.

In an embodiment, the second layer 492 may include a dielectric DI.

In an embodiment, the third layer 493 may include a ground G. In an embodiment, the third layer 493 may include a second bonding portion B2.

In an embodiment, in the second section 446-2 in which the curve 443-2 is disposed, the ground G and the second bonding portion B2 may be disposed between the dielectric DI of the second layer 492 and the first surface 440A of the plate 440-2. The ground G and the second bonding portion B2 may be disposed between the dielectric DI of the second layer 492 and the curve 443-2. The ground G and the second bonding portion B2 may extend along a curved surface of the curve 443-2. The second bonding portion B2 may be configured to bond the ground G and the curve 443-2.

In an embodiment, in the second section 446-2 in which the hole 444-2 is disposed, the ground G and the second bonding portion B2 may be disposed between the dielectric DI of the second layer 492 and the first surface 440A of the plate 440-2. The second bonding portion B2 may be disposed on the hole 444-2.

In an embodiment not shown, the curve 443-2 and/or the hole 444-2 may be disposed in a section in which at least one of the plurality of radiation patches P1, P2, and P3 is disposed. The antenna 497 may include a ground in the section. For example, the first radiation patch P1 or the second radiation patch P2 may be disposed in a section (e.g., the second section 446-2) in which the curve 443-2 and/or the hole 444-2 are disposed, and the ground G may be disposed in the section. The ground G may not be disposed in a section in which the curve 443-2 and/or the hole 444-2 are not disposed.

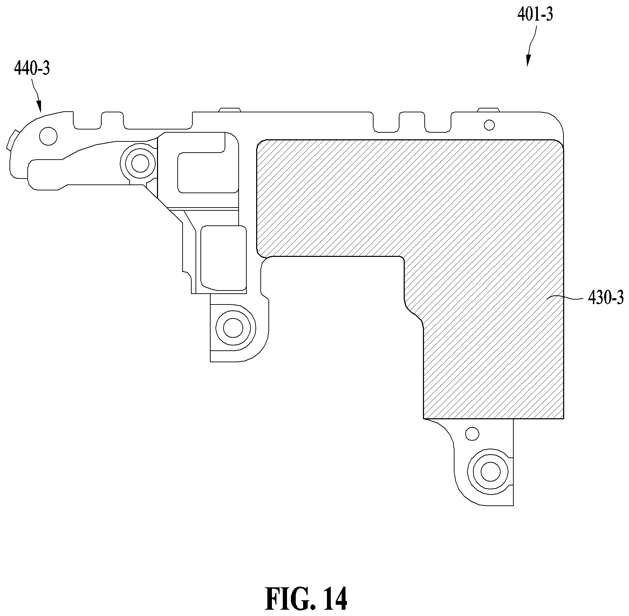

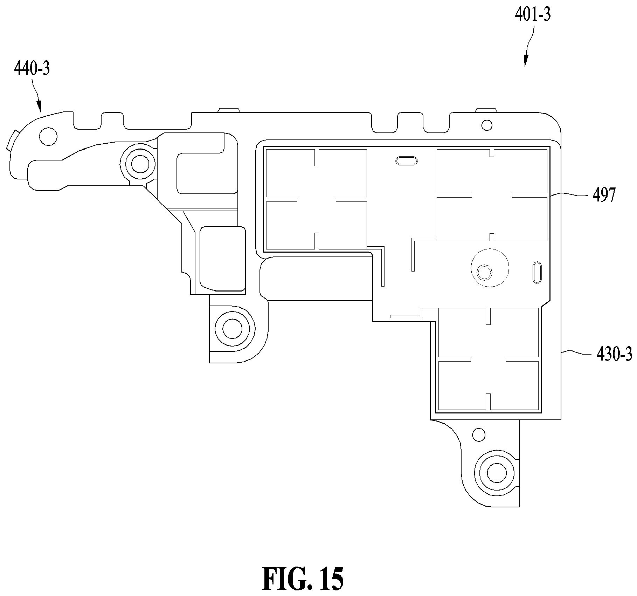

FIG. 14 is a perspective view of a plate of an electronic device according to an embodiment. FIG. 15 is a perspective view of a plate and an antenna module of an electronic device according to an embodiment.

Referring to FIGS. 14 and 15, an electronic device 401-3 (e.g., the electronic device 401 of FIGS. 4 through 6, the electronic device 401-1 of FIGS. 7 through 9, and/or the electronic device 401-2 of FIGS. 10 through 13) may include a plate 440-3 (e.g., the plate 440 of FIGS. 4 through 6, the plate 440-1 of FIGS. 7 through 9, and/or the plate 440-2 of FIGS. 10 through 13), and an antenna 497.

In an embodiment, the plate 440-3 may include a nonmetallic material (e.g., plastic). For example, the plate 440-3 may be formed by injection molding.

In an embodiment, the electronic device 401-3 may include a metal layer 430-3 disposed between the plate 440-3 and the antenna 497. The metal layer 430-3 may be electrically connected to a ground (e.g., the ground G of FIGS. 4 through 6 and/or the ground G of FIGS. 10 through 13) of the antenna 497. For example, the metal layer 430-3 may function as an extended ground of the antenna 497, similarly to the plate 440 of FIGS. 4 through 6.

In an embodiment, the metal layer 430-3 may be disposed on at least a partial area of the plate 440-3.

In an embodiment, the metal layer 430-3 may be formed by applying at least one metallic material. For example, the metal layer 430-3 may be formed by laser direct structuring. The at least one metallic material may include, for example, gold, silver, nickel, palladium, tin, any suitable metal, or a combination thereof.

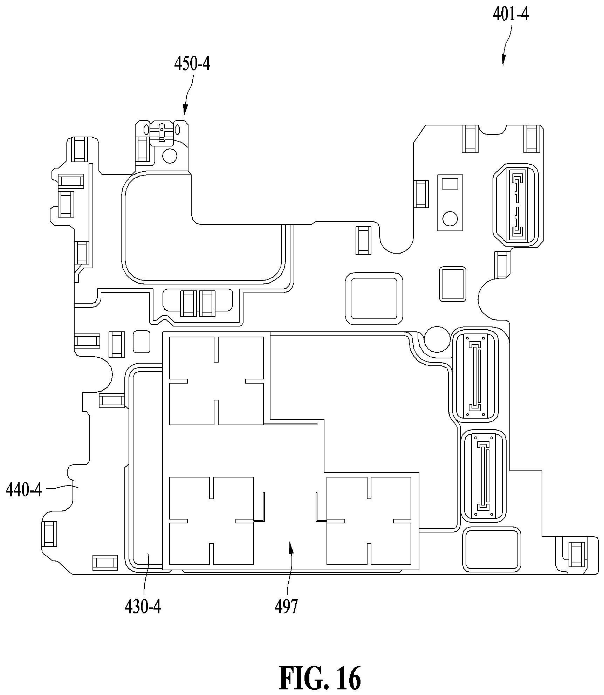

FIG. 16 is a perspective view of a PCB and an antenna module of an electronic device according to an embodiment.

Referring to FIG. 16, an electronic device 401-4 (e.g., the electronic device 401 of FIGS. 4 through 6, the electronic device 401-1 of FIGS. 7 through 9, and/or the electronic device 401-2 of FIGS. 10 through 13) may include a PCB 450-4 (e.g., the first circuit board 251 and/or the second circuit board 252 of FIG. 2C). The PCB 450-4 may include a board portion 440-4 (e.g., the plate 440 of FIGS. 4 through 6, the plate 440-1 of FIGS. 7 through 9, and/or the plate 440-2 of FIGS. 10 through 13). The electronic device 401-4 may include an antenna 497 disposed over the PCB 450-4.

In an embodiment, the electronic device 401-4 may include a shielding layer 430-4. The shielding layer 430-4 may be configured to shield a signal (e.g., electromagnetic waves) to be received from the PCB 450-4 and/or the antenna 497 and/or a signal to be transmitted to the PCB 450-4 and/or the antenna 497.

In an embodiment, the shielding layer 430-4 may be disposed between the PCB 450-4 and the antenna 497. In an embodiment, the shielding layer 430-4 may be disposed on at least a partial area of the board portion 440-4. In an embodiment, the antenna 497 may be disposed on at least a partial area of the shielding layer 430-4.

In an embodiment, the shielding layer 430-4 may include a metallic material. For example, the metallic material may include steel, aluminum, or any metallic material suitable for shielding, or include a combination thereof.

In an embodiment, the shielding layer 430-4 may be disposed on the PCB 450-4 by a surface mount process.

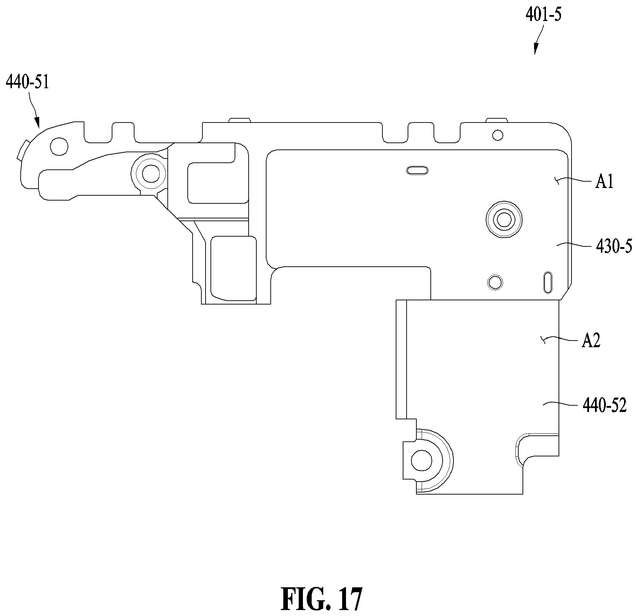

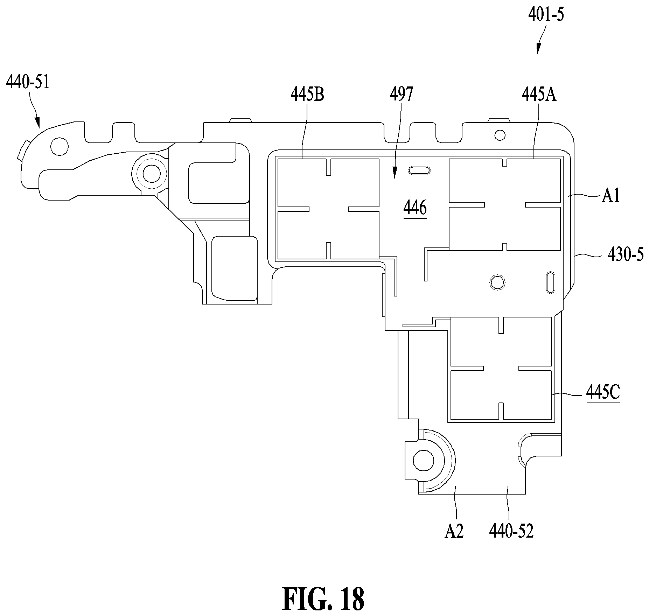

FIG. 17 is a perspective view of a plate of an electronic device according to an embodiment. FIG. 18 is a plan view of a plate and an antenna module of an electronic device according to an embodiment.

Referring to FIGS. 17 and 18, an electronic device 401-5 (e.g., the electronic device 401 of FIGS. 4 through 6, the electronic device 401-1 of FIGS. 7 through 9, the electronic device 401-2 of FIGS. 10 through 13, and/or the electronic device 401-3 of FIGS. 14 and 15) may include a first plate 440-51 (e.g., the plate 440 of FIGS. 4 through 6, the plate 440-1 of FIGS. 7 through 9, the plate 440-2 of FIGS. 10 through 13, and/or the plate 440-3 of FIGS. 14 and 15), and a second plate 440-52 (e.g., the plate 440 of FIGS. 4 through 6, the plate 440-1 of FIGS. 7 through 9, and the plate 440-2 of FIGS. 10 through 13). The electronic device 401-5 may include an antenna 497.

In an embodiment, the electronic device 401-5 may include a metal layer 430-5 (e.g., the metal layer 430-3). In an embodiment, the metal layer 430-5 may be disposed between the first plate 440-51 and the antenna 497. In an embodiment, the metal layer 430-5 may be disposed in a first area A1 that is at least a partial area of the first plate 440-51.

In an embodiment, the antenna 497 may include an area disposed in the first area A1 that is at least a partial area of the first plate 440-51. In an embodiment, the antenna 497 may include an area disposed in a second area A2 that is at least a partial area of the second plate 440-52. In an embodiment, the second area A2 may not overlap the first area A1.

In an embodiment, the first plate 440-51 may include a nonmetallic material (e.g., plastic). For example, the first plate 440-51 may be formed by injection molding.

In an embodiment, the second plate 440-52 may include a metallic material (e.g., stainless steel). In an embodiment, a material of the second plate 440-52 may be different from that of the metal layer 430-5.

In an embodiment, a thickness of the metal layer 430-5 may be substantially the same as a thickness of the second plate 440-52. In an embodiment, if an area of a conductive material of the metal layer 430-5 and an area of a conductive material of the second plate 440-52 abutting a ground of the antenna 497 are substantially constant, the thickness of the metal layer 430-5 and the thicknesses of the second plates 440-52 may change to fit the antenna 497.

In an embodiment, one or more first sections 445A and 445B among the plurality of first sections 445A, 445B, and 445C (e.g., the first sections 445 of FIGS. 4 through 6) may be disposed in the first area A1, and the other first section 445C may be disposed in the second area A2.

In an embodiment, at least a portion of the second section 446 may be disposed in the first area A1. In an embodiment, at least a portion of the second section 446 may be disposed in the second area A2.

In an embodiment, the first plate 440-51 and the second plate 440-52 may be integrally and seamlessly connected to each other. In an embodiment, the first plate 440-51 and the second plate 440-52 may be separably connected to each other.

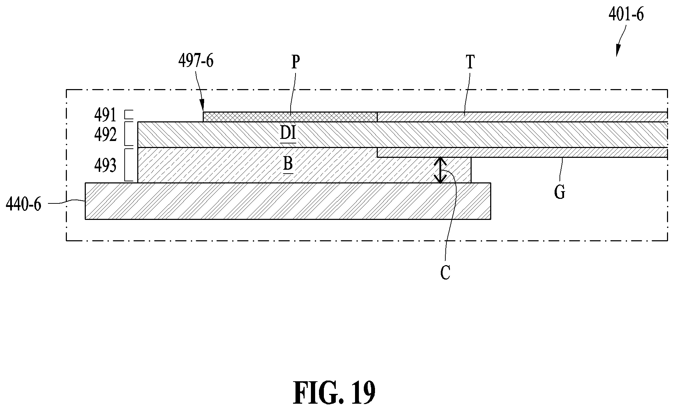

FIG. 19 is a diagram illustrating a plate and an antenna module of an electronic device according to an embodiment.

Referring to FIG. 19, an electronic device 401-6 (e.g., the electronic device 401 of FIGS. 4 through 6, the electronic device 401-1 of FIGS. 7 through 9, the electronic device 401-2 of FIGS. 10 through 13, the electronic device 401-3 of FIGS. 14 and 15, the electronic device 401-4 of FIG. 16, and/or the electronic device 401-5 of FIGS. 17 and 18) may include a plate 440-6 (e.g., the plate 440 of FIGS. 4 through 6, the plate 440-1 of FIGS. 7 through 9, the plate 440-2 of FIGS. 10 through 13, the plate 440-3 of FIGS. 14 and 15, the board portion 440-4 of FIG. 16, and/or the first plate 440-51 of FIGS. 17 and 18).

In an embodiment, the plate 440-6 may include a shielding layer (e.g., the shielding layer 430-4 of FIG. 16).

In an embodiment, the electronic device 401-6 may include an antenna 497-6 (e.g., the antenna 497 of FIGS. 4 through 18). The antenna 497-6 may include a plurality of layers. For example, the antenna 497-6 may include a first layer 491, a second layer 492, and a third layer 493. The first layer 491 may include a plurality of radiation patches P (e.g., the first radiation patch P1, the second radiation patch P2, and the third radiation patch P3). The second layer 492 may include a dielectric DI. The third layer 493 may include a ground G. The third layer 493 may include a bonding portion B (e.g., the first bonding portion B1 and/or the second bonding portion B2). The antenna 497-6 may include a plurality of transmission lines T that is electrically connected to the plurality of radiation patches P, respectively.

In an embodiment, the ground G may be physically separated from the plate 440-6. The ground G may not contact the plate 440-6.

In an embodiment, the ground G may be configured to perform coupling C to the plate 440-6. When at least a portion of the ground G is coupled to the plate 440-6, the plate 440-6 may function as an expanded ground of the antenna 497-6.

An example aspect of the present disclosure may provide an antenna having an increased effective volume and/or increased radiation performance, and an electronic device including the antenna.

According to an embodiment, an electronic device 101, 201, 301, 401 includes a housing 210. The electronic device 101, 201, 301, 401 includes a plate 440 disposed in the housing 210. The electronic device 101, 201, 301, 401 includes an antenna 497. The antenna 497 is disposed on a first surface 440A of the plate 440. The plate 440 includes a plurality of first sections 445 and a second section 446. The antenna 497 includes a plurality of layers 491, 492, and 493. The plurality of layers 491, 492, and 493 are stacked on the plate 440. The plurality of layers 491, 492, and 493 includes the first layer 491. The first layer 491 includes a plurality of radiation patches P1, P2, and P3. The plurality of radiation patches P1, P2, and P3 are disposed in the plurality of first sections 445, respectively. In other words, one each of the plurality of radiation patches P1, P2, and P3 may be disposed in each of the plurality of first sections 445. The plurality of layers 491, 492, and 493 includes the second layer 492. The second layer 492 includes a dielectric DI. The dielectric DI is disposed in the plurality of first sections 445 and the second section 446. The plurality of layers 491, 492, and 493 includes the third layer 493. The third layer 493 includes a ground G. The ground G is disposed in the second section 446. The third layer 493 includes a plurality of first bonding portions B1. The plurality of first bonding portions B1 is disposed in the plurality of first sections 445, respectively. In other words, one each of the first bonding portions B1 may be disposed in each of the plurality of first sections 445. The plurality of first bonding portions B1 is configured to bond the dielectric DI and the plate 440. The third layer 493 includes a second bonding portion B2. The second bonding portion B2 is disposed in the second section 446. The second bonding portion B2 is configured to bond the ground G and the plate 440. A thickness of each of the plurality of first bonding portions B1 is greater than a thickness of the second bonding portion B2. According to an embodiment, an effective volume of the antenna 497 may be increased. According to an embodiment, a gain of the antenna 497 in a predetermined band may be increased. The increase in effective volume of the antenna without an increase in a height of the antenna allows the antenna to be more efficient while still allowing the mounting of the antenna in very thin electronic devices.

In an embodiment, the plurality of first sections 445 may comprise three first sections 445. In an embodiment, the plurality of first sections 445 may comprise only three first sections 445.

In an embodiment, the plurality of radiation patches P1, P2 and P3 may comprise three radiation patches P1, P2 and P3. In an embodiment, the plurality of radiation patches P1, P2 and P3 may comprise only three radiation patches P1, P2 and P3.

In an embodiment, the plurality of first bonding portions B1 may include non-conductive materials. In an embodiment, the plurality of first bonding portions B1 may be composed of non-conductive materials. In an embodiment, the plurality of first bonding portions B1 may consist of non-conductive materials.

In an embodiment, the plurality of first bonding portions B1 may contact the dielectric DI. In an embodiment, the plurality of first bonding portions B1 may directly contact the dielectric DI.

In an embodiment, the second bonding portion B2 may include a conductive material. In an embodiment, the second bonding portion B2 may be composed of a conductive material. In an embodiment, the second bonding portion B2 may consist of a conductive material.

In an embodiment, the second bonding portion B2 may contact the ground G. In an embodiment, the second bonding portion B2 may directly contact the ground G.

In an embodiment, a size of each of the plurality of first sections 445 may be substantially equal to or greater than a size of each of the plurality of radiation patches P1, P2, and P3. In an embodiment, a size of each of the plurality of first sections 445 may be at least the same as a size of each of the plurality of radiation patches P1, P2, and P3. In an embodiment, a size of each of the plurality of first sections 445 may be at least 90% of a size of each of the plurality of radiation patches P1, P2, and P3.

In an embodiment, a plate 440-1 may include a recess 444-1. The recess 444-1 may be disposed in at least one first section 445 among the plurality of first sections 445. The recess 444-1 may be configured to accommodate at least a portion of at least one of the plurality of layers 491, 492, and 493. By including a recess in the plate, the antenna volume may be further increased and the antenna performance improved.

In an embodiment, the recess 444-1 may protrude from a second surface 440B of the plate 440-1 opposite to a first surface 440A of the plate 440-1.

In an embodiment, the plate 440 may include a metallic material. In an embodiment, the plate 440 may be comprised of a metallic material. In an embodiment, the plate 440 may consist of a metallic material. The ground G may be electrically connected to the plate 440. In an embodiment, the plate 440 may include, consist of or be comprised of a conductive material. The ground G may be directly electrically connected to the plate 440. By connecting the ground to a metallic plate, the effective size of the ground is expanded, which improves the efficiency and bandwidth of the antenna.

In an embodiment, a plate 440-2 may include a curve 443-2. The curve 443-2 may be a bulge in the material of the plate 440-2. The curve 443-2 may be disposed in a second section 446-2. The ground G may be disposed on the curve 443-2.

In an embodiment, the plate 440-2 may include a hole 444-2. The hole 444-2 may be a cutout in the plate 440-2. The hole 444-2 may be disposed in the second section 446-2. The ground G may be disposed on the hole 444-2.

When the plate includes a hole or curve the antenna can be more easily mounted in the electronic device.

In an embodiment, a plate 440-3 may include a nonmetallic material or may include a non-conductive material. An electronic device 401-3 may include a metal layer 430-3. The metal layer 430-3 may be disposed between the plate 440-3 and the antenna 497. The metal layer 430-3 may be disposed directly between the plate 440-3 and the antenna 497. The ground G may be electrically connected or directly electrically connected to the metal layer 430-3.

In an embodiment, the electronic device 401-4 may include a PCB 450-4. The electronic device 401-4 may include a shielding layer 430-4. The shielding layer 430-4 may be disposed between the board portion 440-4 and the antenna 497. The shielding layer 430-4 may be disposed directly between the board portion 440-4 and the antenna 497.

In an embodiment, the plate 440 may be a first plate 440-51 formed of a nonmetallic or non-conductive material. An electronic device 401-5 may include a metal layer 430-5 disposed between the first plate 440-51 and the antenna 497. An electronic device 401-5 may include a metal layer 430-5 disposed directly between the first plate 440-51 and the antenna 497. The electronic device 401-5 may include a second plate 440-52 formed of a metallic or conductive material. At least one first section 445A, 445B among the plurality of first sections 445A, 445B, and 445C may be at least partially disposed on the first plate 440-51. The remaining at least one first section 445C among the plurality of first sections 445A, 445B, and 445C may be at least partially disposed on the second plate 440-52.

In an embodiment, the ground G may be disposed to be separated from the plate 440-6. The ground G may be configured to perform coupling to the plate 440-6.

The effects of an antenna and an electronic device including the antenna according to embodiments are not limited to the above-mentioned effects, and other unmentioned effects can be clearly understood from the above description by one of ordinary skill in the art.

The embodiments of the present disclosure are intended to be illustrative and not restrictive.

## Claims

1. An electronic device (101, 201, 301, 401) comprising:
a housing (210),
a plate (440) disposed in the housing (210), and
an antenna (497) disposed on a first surface (440A) of the plate (440),
wherein the plate (440) comprises a plurality of first sections (445), and a second section (446),
wherein the antenna (497) comprises a plurality of layers (491, 492, 493) stacked on the plate (440),
wherein the plurality of layers (491, 492, 493) comprises:
a first layer (491) comprising a plurality of radiation patches (P1, P2, P3) disposed in the plurality of first sections (445), respectively;
a second layer (492) comprising a dielectric (DI) disposed in the plurality of first sections (445) and the second section (446); and
a third layer (493) comprising a ground (G) disposed in the second section (446), a plurality of first bonding portions (B1) that is disposed in the plurality of first sections (445), respectively and that is configured to bond the dielectric (DI) and the plate (440), and a second bonding portion (B2) that is disposed in the second section (446) and that is configured to bond the ground (G) and the plate (440), and
wherein a thickness of each of the plurality of first bonding portions (B1) is greater than a thickness of the second bonding portion (B2).

2. The electronic device of claim 1, wherein the plurality of first bonding portions (B1) comprises a non-conductive material.

3. The electronic device of claim 1 or 2, wherein the plurality of first bonding portions (B1) contacts the dielectric (DI).

4. The electronic device of one of claims 1 to 3, wherein the second bonding portion (B2) comprises a conductive material.

5. The electronic device of one of claims 1 to 4, wherein the second bonding portion (B2) contacts the ground (G).

6. The electronic device of one of claims 1 to 5, wherein a size of each of the plurality of first sections (445) is substantially equal to or greater than a size of each of the plurality of radiation patches (P1, P2, P3).

7. The electronic device of one of claims 1 to 6, wherein the plate (440-1) further comprises a recess (444-1) disposed in at least one first section (445) among the plurality of first sections (445) and configured to receive at least a portion of at least one of the plurality of layers (491, 492, 493).

8. The electronic device of claim 7, wherein the recess (444-1) protrudes from a second surface (440B) of the plate (440-1) opposite to the first surface (440A) of the plate (440-1).

9. The electronic device of one of claims 1 to 8, wherein
the plate (440) comprises a metallic material, and
the ground (G) is electrically connected to the plate (440).

10. The electronic device of one of claims 1 to 9, wherein
the plate (440-2) comprises a curve (443-2) disposed in the second section (446-2), and
the ground (G) is disposed on the curve (443-2).

11. The electronic device of one of claims 1 to 10, wherein
the plate (440-2) comprises a hole (444-2) disposed in the second section (446-2), and
the ground (G) is disposed on the hole (444-2).

12. The electronic device of one of claims 1 to 11, wherein
the plate (440-3) comprises a nonmetallic material,
the electronic device (401-3) further comprises a metal layer (430-3) disposed between the plate (440-3) and the antenna (497), and
the ground is electrically connected to the metal layer (430-3).

13. The electronic device of one of claims 1 to 12, further comprising:
a printed circuit board (PCB) (450-4); and
a shielding layer (430-4) disposed between the PCB (450-4) and the antenna (497).

14. The electronic device of one of claims 1 to 13, wherein
the plate (440) is a first plate (440-51) formed of a nonmetallic material,
the electronic device (401-5) further comprises a metal layer (430-5) disposed between the first plate (440-51) and the antenna (497), and a second plate (440-52) formed of a metallic material, and
at least one first section (445A, 445B) among a plurality of first sections (445A, 445B, 445C) is at least partially disposed on the first plate (440-51), and at least one remaining first section (445C) among the plurality of first sections (445A, 445B, 445C) is at least partially disposed on the second plate (440-52).

15. The electronic device of one of claims 1 to 14, wherein
the ground (G) is disposed to be separated from the plate (440-6), and
the ground (G) is configured to be coupled to the plate (440-6).

## Patentansprüche

1. Elektronisches Gerät (101, 201, 301, 401), umfassend:
ein Gehäuse (210),
eine in dem Gehäuse (210) angeordnete Platte (440) und
eine auf einer ersten Oberfläche (440A) der Platte (440) angeordnete Antenne (497),
wobei die Platte (440) mehrere erste Abschnitte (445) und einen zweiten Abschnitt (446) umfasst,
wobei die Antenne (497) mehrere Schichten (491, 492, 493) umfasst, die auf der Platte (440) gestapelt sind,
wobei die mehreren Schichten (491, 492, 493) Folgendes umfasst:
eine erste Schicht (491), die mehrere Strahlungspatchs (P1, P2, P3) umfasst, die jeweils in den mehreren ersten Abschnitten (445) angeordnet sind;
eine zweite Schicht (492), die ein Dielektrikum (DI) umfasst, das in den mehreren ersten Abschnitten (445) und dem zweiten Abschnitt (446) angeordnet ist; und
eine dritte Schicht (493), die eine in dem zweiten Abschnitt (446) angeordnete Masse (G), mehrere erste Verbindungsabschnitte (B1), die jeweils in den mehreren ersten Abschnitten (445) angeordnet und zur Verbindung des Dielektrikums (DI) und der Platte (440) konfiguriert sind, und einen zweiten Verbindungsabschnitt (B2) umfasst, der in dem zweiten Abschnitt (446) angeordnet und zur Verbindung der Masse (G) und der Platte (440) konfiguriert ist, und
wobei eine Dicke jedes der mehreren ersten Verbindungsabschnitte (B1) größer ist als eine Dicke des zweiten Verbindungsabschnitts (B2).

2. Elektronisches Gerät nach Anspruch 1, wobei die mehreren ersten Verbindungsabschnitte (B1) ein nicht leitfähiges Material umfassen.

3. Elektronisches Gerät nach Anspruch 1 oder 2, wobei die mehreren ersten Verbindungsabschnitte (B1) mit dem Dielektrikum (DI) in Kontakt stehen.

4. Elektronisches Gerät nach einem der Ansprüche 1 bis 3, wobei der zweite Verbindungsabschnitt (B2) ein leitfähiges Material umfasst.

5. Elektronisches Gerät nach einem der Ansprüche 1 bis 4, wobei der zweite Verbindungsabschnitt (B2) mit der Masse (G) in Kontakt steht.

6. Elektronisches Gerät nach einem der Ansprüche 1 bis 5, wobei die Größe jedes der mehreren ersten Abschnitte (445) im Wesentlichen gleich oder größer als die Größe jedes der mehreren Strahlungspatchs (P1, P2, P3) ist.

7. Elektronisches Gerät nach einem der Ansprüche 1 bis 6, wobei die Platte (440-1) ferner eine Aussparung (444-1) umfasst, die in mindestens einem ersten Abschnitt (445) unter den mehreren ersten Abschnitten (445) angeordnet und zur Aufnahme mindestens eines Teils mindestens einer der mehreren Schichten (491, 492, 493) konfiguriert ist.

8. Elektronisches Gerät nach Anspruch 7, wobei die Aussparung (444-1) von einer zweiten Oberfläche (440B) der Platte (440-1) vorsteht, die gegenüber der ersten Oberfläche (440A) der Platte (440-1) liegt.

9. Elektronisches Gerät nach einem der Ansprüche 1 bis 8, wobei
die Platte (440) ein metallisches Material umfasst und
die Masse (G) elektrisch mit der Platte (440) verbunden ist.

10. Elektronisches Gerät nach einem der Ansprüche 1 bis 9, wobei
die Platte (440-2) eine in dem zweiten Abschnitt (446-2) angeordnete Kurve (443-2) umfasst und
die Masse (G) auf der Kurve (443-2) angeordnet ist.

11. Elektronisches Gerät nach einem der Ansprüche 1 bis 10, wobei
die Platte (440-2) ein Loch (444-2) umfasst, das im zweiten Abschnitt (446-2) angeordnet ist, und
die Masse (G) auf dem Loch (444-2) angeordnet ist.

12. Elektronisches Gerät nach einem der Ansprüche 1 bis 11, wobei
die Platte (440-3) ein nichtmetallisches Material umfasst,
das elektronische Gerät (401-3) ferner eine Metallschicht (430-3) umfasst, die zwischen der Platte (440-3) und der Antenne (497) angeordnet ist, und
die Masse elektrisch mit der Metallschicht (430-3) verbunden ist.

13. Elektronisches Gerät nach einem der Ansprüche 1 bis 12, umfassend ferner:
eine Leiterplatte (PCB) (450-4); und
eine Abschirmschicht (430-4), die zwischen der PCB (450-4) und der Antenne (497) angeordnet ist.

14. Elektronisches Gerät nach einem der Ansprüche 1 bis 13, wobei
die Platte (440) eine erste Platte (440-51) ist, die aus einem nichtmetallischen Material gebildet ist,
das elektronische Gerät (401-5) ferner eine Metallschicht (430-5), die zwischen der ersten Platte (440-51) und der Antenne (497) angeordnet ist, und eine zweite Platte (440-52) umfasst, aus einem metallischen Material gebildet ist, und
mindestens ein erster Abschnitt (445A, 445B) unter mehreren ersten Abschnitten (445A, 445B, 445C) zumindest teilweise auf der ersten Platte (440-51) angeordnet ist, während mindestens ein verbleibender erster Abschnitt (445C) unter den mehreren ersten Abschnitten (445A, 445B, 445C) zumindest teilweise auf der zweiten Platte (440-52) angeordnet ist.

15. Elektronisches Gerät nach einem der Ansprüche 1 bis 14, wobei
die Masse (G) so angeordnet ist, dass sie von der Platte (440-6) getrennt ist, und
die Masse (G) so konfiguriert ist, dass sie mit der Platte (440-6) gekoppelt ist.

## Revendications

1. Équipement électronique (101, 201, 301, 401), comprenant :
un boîtier (210),
une plaque (440) disposée dans le boîtier (210), et
une antenne (497) disposée sur une première surface (440A) de la plaque (440),
dans lequel la plaque (440) comprend une pluralité de premières sections (445) et une deuxième section (446),
dans lequel l'antenne (497) comprend une pluralité de couches (491, 492, 493) empilées sur la plaque (440),
dans lequel la pluralité de couches (491, 492, 493) comprennent :
une première couche (491) comprenant une pluralité de patchs de radiation (P1, P2, P3) disposés dans la pluralité de premières sections (445), respectivement ;
une deuxième couche (492) comprenant un diélectrique (DI) disposé dans la pluralité de premières sections (445) et la deuxième section (446) ; et
une troisième couche (493) comprenant une terre (G) disposée dans la deuxième section (446), une pluralité de premières portions de liaison (B1) qui est disposée dans la pluralité de premières sections (445), respectivement et qui est configurée pour lier le diélectrique (DI) et la plaque (440), et une deuxième portion de liaison (B2) qui est disposée dans la deuxième section (446) et qui est configurée pour lier la terre (G) et la plaque (440), et
dans lequel une épaisseur de chacune de la pluralité de premières portions de liaison (B1) est supérieure à une épaisseur de la deuxième portion de liaison (B2).

2. Équipement électronique selon la revendication 1, dans lequel la pluralité de premières portions de liaison (B1) comprennent un matériau non conducteur.

3. Équipement électronique selon la revendication 1 ou 2, dans lequel la pluralité des premières portions de liaison (B1) est en contact avec le diélectrique (DI).

4. Équipement électronique selon l'une quelconque des revendications 1 à 3, dans lequel la deuxième portion de liaison (B2) comprend un matériau conducteur.

5. Équipement électronique selon l'une quelconque des revendications 1 à 4, dans lequel la deuxième portion de liaison (B2) est en contact avec la terre (G).

6. Équipement électronique selon l'une quelconque des revendications 1 à 5, dans lequel une taille de chacune de la pluralité de premières sections (445) est sensiblement égale ou supérieure à une taille de chacune de la pluralité de patchs de radiation (P1, P2, P3).

7. Équipement électronique selon l'une quelconque des revendications 1 à 6, dans lequel la plaque (440-1) comprend en outre un évidement (444-1) disposé dans au moins une première section (445) parmi la pluralité de premières sections (445) et configuré pour recevoir au moins une partie d'au moins une de la pluralité de couches (491, 492, 493).

8. Équipement électronique selon la revendication 7, dans lequel l'évidement (444-1) fait saillie à partir d'une deuxième surface (440B) de la plaque (440-1) à l'opposé de la première surface (440A) de la plaque (440-1).

9. Équipement électronique selon l'une quelconque des revendications 1 à 8, dans lequel,
la plaque (440) comprend un matériau métallique, et
la terre (G) est connectée électriquement à la plaque (440).

10. Équipement électronique selon l'une quelconque des revendications 1 à 9, dans lequel,
la plaque (440-2) comprend une courbe (443-2) disposée dans la deuxième section (446-2), et
la terre (G) est disposée sur la courbe (443-2).

11. Équipement électronique selon l'une quelconque des revendications 1 à 10, dans lequel,
la plaque (440-2) comprend un trou (444-2) disposé dans la deuxième section (446-2), et
la terre (G) est disposée sur le trou (444-2).

12. Équipement électronique selon l'une quelconque des revendications 1 à 11, dans lequel,
la plaque (440-3) comprend un matériau non métallique,
l'équipement électronique (401-3) comprend en outre une couche métallique (430-3) disposée entre la plaque (440-3) et l'antenne (497), et
la terre est connectée électriquement à la couche métallique (430-3).

13. Équipement électronique selon l'une quelconque des revendications 1 à 12, comprenant en outre :
une carte de circuit imprimé (PCB) (450-4) ; et
une couche de blindage (430-4) disposée entre la PCB (450-4) et l'antenne (497).

14. Équipement électronique selon l'une quelconque des revendications 1 à 13, dans lequel,
la plaque (440) est une première plaque (440-51) formée d'un matériau non métallique,
l'équipement électronique (401-5) comprend en outre une couche métallique (430-5) disposée entre la première plaque (440-51) et l'antenne (497), et une deuxième plaque (440-52) formée d'un matériau métallique, et
au moins une première section (445A, 445B) parmi une pluralité de premières sections (445A, 445B, 445C) est au moins partiellement disposée sur la première plaque (440-51), et au moins une première section restante (445C) parmi la pluralité de premières sections (445A, 445B, 445C) est au moins partiellement disposée sur la deuxième plaque (440-52).

15. Équipement électronique selon l'une quelconque des revendications 1 à 14, dans lequel,
la terre (G) est disposée pour être séparé de la plaque (440-6), et
la terre (G) est configurée pour être couplé à la plaque (440-6).
